# FASCICULE DE BREVET EUROPEEN

(11) **EP 2 709 008 B1**
(45) Date de publication et mention de la délivrance du brevet: **08.04.2020**
(21) Numéro de dépôt: 13306241.4
(22) Date de dépôt: 10.09.2013
(51) Int. Cl.: G06F 9/48, G06F 11/07

(54) **Procédé et dispositif de décompte du temps déporté pour unité de traitement dans un système de traitement de l'information**
Verfahren und Vorrichtung zur versetzten Zeitabrechnung für Verarbeitungseinheit eines Informationsverarbeitungssystems
Method and device for counting the offset time for a processing unit in an information processing system

(30) Priorité: 12.09.2012 FR 1258567
(43) Date de publication de la demande: 19.03.2014
(73) Titulaire: BULL SAS, 78340 Les Clayes sous Bois (FR)
(72) Inventeur: Kalemkarian, Yann, 38100 Grenoble (FR); Ficet, Jean-Vincent, 73100 La Chappelle Blanche (FR); Couvee, Philippe, 38190 Villard Bonnot (FR); Dugue, Sébastien, 38119 Saint Theoffrey (FR)
(74) Mandataire: Santarelli

(56) Documents cités:
- US-B1- 6 179 489
- US-B1- 7 472 237
- MUIR S ET AL: "AsyMOS-an asymmetric multiprocessor operating system", OPEN ARCHITECTURES AND NETWORK PROGRAMMING, 1998 IEEE SAN FRANCISCO, CA, USA 3-4 APRIL 1998, NEW YORK, NY, USA,IEEE, US, 3 avril 1998 (1998-04-03), pages 25-34, XP010272573, DOI: 10.1109/OPNARC.1998.662041 ISBN: 978-0-7803-4783-0
- FOONG A ET AL: "An Architecture for Software-Based iSCSI on Multiprocessor Servers", PARALLEL AND DISTRIBUTED PROCESSING SYMPOSIUM, 2005. PROCEEDINGS. 19TH IEEE INTERNATIONAL DENVER, CO, USA 04-08 APRIL 2005, PISCATAWAY, NJ, USA,IEEE, 4 avril 2005 (2005-04-04), pages 213b-213b, XP010785788, DOI: 10.1109/IPDPS.2005.89 ISBN: 978-0-7695-2312-5

## Description

La présente invention concerne le traitement d'instructions et de données dans des systèmes de traitement de l'information et plus particulièrement un procédé et un dispositif de décompte du temps déporté, notamment dans un périphérique, pour unité de traitement, dans un système de traitement de l'information, adapté, en particulier, à un nœud de cluster.

Le calcul haute performance, aussi appelé HPC (sigle de *High Performance Computing* en terminologie anglo-saxonne) se développe pour la recherche universitaire comme pour l'industrie, notamment dans des domaines techniques tels que l'automobile, l'aéronautique, l'énergie, la climatologie et les sciences de la vie. La modélisation et la simulation permettent en particulier de réduire les coûts de développement, d'accélérer la mise sur le marché de produits innovants, plus fiables et moins consommateurs d'énergie. Pour les chercheurs, le calcul haute performance est devenu un moyen d'investigation indispensable.

Ces calculs sont généralement mis en œuvre sur des systèmes de traitement de données appelés clusters (parfois traduit « *grappes de serveurs* »). Un cluster comprend typiquement un ensemble de nœuds interconnectés. Certains nœuds sont utilisés pour effectuer des tâches de calcul (nœuds de calcul), d'autres pour stocker des données (nœuds de stockage) et un ou plusieurs autres gèrent le cluster (nœuds d'administration). Chaque nœud est par exemple un serveur mettant en œuvre un système d'exploitation tel que Linux (Linux est une marque). La connexion entre les nœuds est, par exemple, réalisée à l'aide de liens de communication Ethernet et de réseaux d'interconnexions (par exemple Infiniband) (Ethernet et Infiniband sont des marques).

Le document US7472237 B1 concerne la délégation du traitement de minuteurs, trames et sémaphores d'un processeur à un autre.

Le document US6179489 B1 concerne la délégation du traitement de tâches d'une unité centrale de traitement (CPU) vers un processeur de signal numérique (DSP), chaque processeur ayant accès à la mémoire vive (RAM) de l'autre à travers un dispositif de mémoire virtuelle.

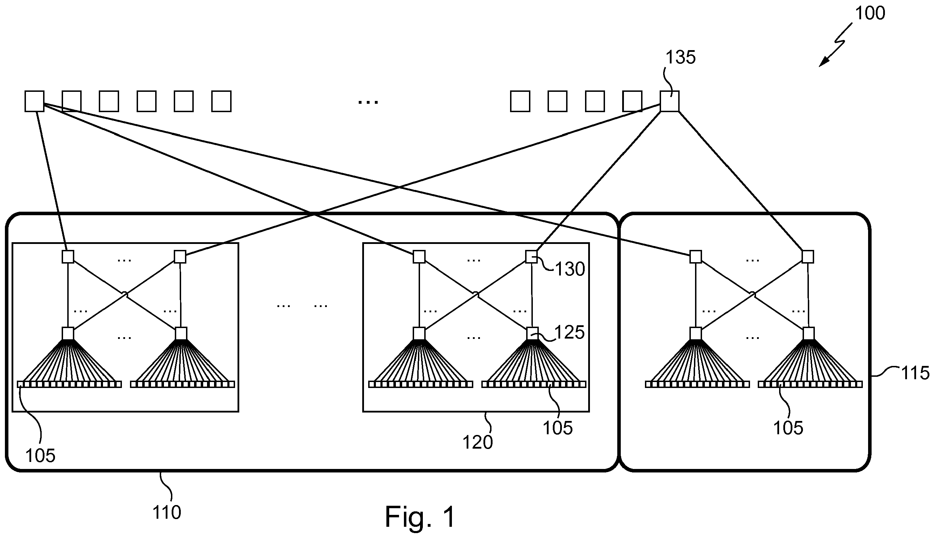

La figure 1 illustre schématiquement un exemple d'une topologie 100 d'un cluster, de type *fat-tree.* Ce dernier comprend un ensemble de nœuds génériquement référencés 105. Les nœuds appartenant à l'ensemble 110 sont ici des nœuds de calcul tandis que les nœuds de l'ensemble 115 sont des nœuds de service (nœuds de stockage et nœuds d'administration). Les nœuds de calcul peuvent être regroupés en sous-ensembles 120 appelés îlots de calcul, l'ensemble 115 étant appelé îlot de service.

Les nœuds sont reliés les uns aux autres par des commutateurs (appelés *switch* en terminologie anglo-saxonne), par exemple de façon hiérarchique. Dans l'exemple illustré sur la figure 1, les nœuds sont connectés à des commutateurs 125 de premier niveau qui sont eux-mêmes reliés à des commutateurs 130 de deuxième niveau qui sont à leur tour reliés à des commutateurs 135 de troisième niveau.

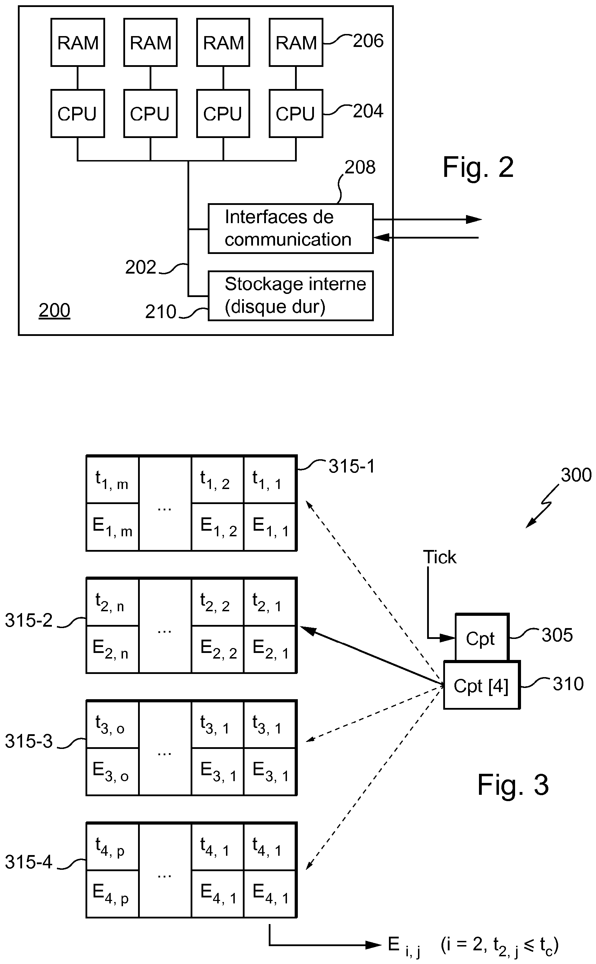

Comme illustré sur la figure 2, chaque nœud comprend généralement un ou plusieurs microprocesseurs, des mémoires locales ainsi qu'une interface de communication. Plus précisément, le nœud 200 comporte ici un bus de communication 202 auquel sont reliés :
- des unités centrales de traitement ou microprocesseurs 204 (ou CPU, sigle de *Central Processing Unit* en terminologie anglo-saxonne) ;
- des composants de mémoire vive 206 (RAM, acronyme de *Random Access Memory* en terminologie anglo-saxonne) comportant des registres adaptés à enregistrer des variables et paramètres créés et modifiés au cours de l'exécution de programmes (comme illustré, chaque composant de mémoire vive peut être associé à un microprocesseur) ; et,
- des interfaces de communication 208 adaptées à transmettre et à recevoir des données.

Le nœud 200 dispose en outre ici de moyens de stockage interne 210, tels que des disques durs, pouvant notamment comporter le code exécutable de programmes.

Le bus de communication permet la communication et l'interopérabilité entre les différents éléments inclus dans le nœud 200 ou reliés à lui. Les microprocesseurs 204 commandent et dirigent l'exécution des instructions ou portions de code logiciel du ou des programmes. Lors de la mise sous tension, le ou les programmes qui sont stockés dans une mémoire non volatile, par exemple un disque dur, sont transférés dans la mémoire vive 206.

Tout comme les applications HPC, les clusters utilisés pour la mise en œuvre de ces applications sont optimisés. En particulier, aucune fonction se basant sur le temps, par exemple une fonction de transmission conditionnée à un délai maximum d'attente (appelée *timeout* en terminologie anglo-saxonne), n'est généralement proposée. En effet, ces fonctions sont typiquement basées sur des compteurs de temps ou horloges (appelées *timers* en terminologie anglo-saxonne) dont l'utilisation engendre des pénalités de performance trop importantes du fait qu'elles sont généralement gérées par le système d'exploitation utilisé qui doit ainsi être sollicité à chaque utilisation. En outre, la résolution de ces horloges n'est souvent pas assez élevée pour des applications réelles.

Utiliser une horloge pour implémenter des alarmes ou permettre l'émission de notifications temporelles à des processus d'une application HPC revient à ce que chaque processus s'inscrive auprès du noyau du système d'exploitation (appel *kernel* en terminologie anglo-saxonne) par le biais d'un appel système (appelé *syscall* en terminologie anglo-saxonne) pour être notifié de l'échéance. La notification est effectuée par un signal envoyé du noyau vers le processus ou par opération via un canal de communication appelé *pipe* en terminologie anglo-saxonne. Cependant, un tel mode de réalisation est souvent trop pénalisant pour être utilisé en pratique.

En dépit de ces constatations, des fonctions basées sur le temps sont utiles à certaines applications HPC, par exemple des applications médicales qui doivent effectuer des calculs dans un temps très contraint ou des applications de prévision météorologique qui peuvent avoir besoin d'être reparamétrée dynamiquement. De telles applications ont besoin d'utiliser des horloges efficacement pour optimiser le séquencement et le déroulement de leurs codes.

Il existe donc un besoin pour permettre l'exécution de fonctions basées sur le temps, en particulier de fonctions de décompte du temps, dans des architectures de type cluster.

L'invention a ainsi pour objet un procédé de décompte du temps dans un système comprenant un périphérique et au moins un nœud permettant l'exécution d'un système d'exploitation et d'au moins un processus applicatif, l'un dudit au moins un nœud et dudit périphérique comprenant un espace mémoire réel et l'autre dudit au moins un nœud et dudit périphérique comprenant un espace mémoire virtuel correspondant au moins partiellement audit espace mémoire réel, ledit périphérique offrant un mécanisme de décompte de temps, ce procédé comprenant les étapes suivantes,
- lors d'une réception d'une commande de décompte de temps dans ledit espace mémoire réel, dans une partie correspondant à une partie dudit espace mémoire virtuel, ladite commande comprenant une référence à un événement et une référence de temps, création, dans ledit périphérique, d'une entrée dans une queue de surveillance, ladite entrée comprenant des données relatives auxdites références d'événement et de temps ;
- comparaison, dans ledit périphérique, d'un instant courant et d'au moins un instant d'échéance lié à une donnée relative à une référence de temps mémorisée dans ladite queue de surveillance ; et
- en réponse à ladite comparaison, si ledit instant courant est postérieur audit au moins un instant d'échéance, mémorisation d'une donnée relative à une référence liée à ladite donnée relative à une référence de temps mémorisée dans ladite queue de surveillance, dans ledit espace mémoire réel, dans une partie correspondant à une partie dudit espace mémoire virtuel.

Le procédé selon l'invention permet ainsi d'offrir des fonctionnalités basées sur la gestion du temps sans engendrer de pénalités de performance liées à leur mise en œuvre.

De façon avantageuse, le procédé comprend en outre une étape d'estimation dudit au moins un instant d'échéance.

Selon un mode de réalisation particulier, le procédé comprend en outre une étape de sélection de ladite queue de surveillance parmi une pluralité de queues de surveillance. Le procédé selon l'invention permet ainsi d'offrir des fonctionnalités basées sur la gestion du temps ayant une résolution suffisante pour des applications réelles.

Toujours selon un mode de réalisation particulier, ladite sélection est au moins partiellement basée sur un instant courant et une référence de temps.

Toujours selon un mode de réalisation particulier, ladite queue de surveillance est ordonnée afin d'en faciliter la gestion.

L'invention a également pour objet un programme d'ordinateur comprenant des instructions adaptées à la mise en œuvre de chacune des étapes du procédé décrit précédemment lorsque ledit programme est exécuté sur un ordinateur.

L'invention a aussi pour objet un dispositif de décompte du temps pour un système comprenant un périphérique et au moins un nœud permettant l'exécution d'un système d'exploitation et d'au moins un processus applicatif, l'un dudit au moins un nœud et dudit périphérique comprenant un espace mémoire réel et l'autre dudit au moins un nœud et dudit périphérique comprenant un espace mémoire virtuel correspondant au moins partiellement audit espace mémoire réel, ledit dispositif comprenant un mécanisme de décompte de temps et les moyens suivants
- moyens pour créer, lors d'une réception d'une commande de décompte de temps dans ledit espace mémoire réel, dans une partie correspondant à une partie dudit espace mémoire virtuel, ladite commande comprenant une référence à un événement et une référence de temps, création une entrée dans une queue de surveillance, ladite entrée comprenant des données relatives auxdites références d'événement et de temps ;
- moyens pour comparer un instant courant et au moins un instant d'échéance lié à une donnée relative à une référence de temps mémorisée dans ladite queue de surveillance ; et
- moyens pour mémoriser, en réponse à ladite comparaison, si ledit instant courant est postérieur audit au moins un instant d'échéance, une donnée relative à une référence liée à ladite donnée relative à une référence de temps mémorisée dans ladite queue de surveillance, dans ledit espace mémoire réel, dans une partie correspondant à une partie dudit espace mémoire virtuel.

Le dispositif selon l'invention permet ainsi d'offrir des fonctionnalités basées sur la gestion du temps sans engendrer de pénalités de performance liées à leur mise en œuvre.

Selon un mode de réalisation particulier, le dispositif comprend en outre un compteur pour décompter le temps et un mécanisme de sélection d'une queue de surveillance parmi une pluralité de queues de surveillance. Le dispositif selon l'invention permet ainsi d'offrir des fonctionnalités basées sur la gestion du temps ayant une résolution suffisante pour des applications réelles.

Toujours selon un mode de réalisation particulier, ledit mécanisme de sélection est au moins partiellement basé sur une valeur dudit compteur.

L'invention a également pour objet un périphérique comprenant le dispositif décrit précédemment et ledit espace mémoire réel.

D'autres avantages, buts et caractéristiques de la présente invention ressortent de la description détaillée qui suit, faite à titre d'exemple non limitatif, au regard des dessins annexés dans lesquels :
- la figure 1 illustre un exemple de topologie d'un cluster ;
- la figure 2 illustre un exemple d'architecture d'un nœud d'un cluster ;
- la figure 3 représente un exemple de mécanisme de gestion de queues d'un système de gestion du temps, conforme à un mode de réalisation particulier de l'invention ; et
- la figure 4 illustre un exemple d'intégration d'un mécanisme de gestion de queues d'événements, tel que celui représenté sur la figure 3, dans un système de gestion du temps mis en œuvre dans un périphérique tel qu'une carte réseau reliée à un nœud d'un cluster.

De façon générale, l'invention combine avantageusement un mécanisme de gestion d'adresses virtuelles d'un espace utilisateur associé à un noyau d'un système d'exploitation mis en œuvre dans le nœud d'un cluster avec un système de gestion du temps déporté, typiquement mis en œuvre dans un périphérique, afin d'offrir, en particulier, une fonctionnalité d'alarme dans un processus applicatif du nœud, sans affecter le noyau.

Le mécanisme déporté de gestion du temps peut être mis en œuvre, par exemple, dans une carte réseau.

Ainsi, pour offrir des fonctions basées sur le temps à des applications de type HPC exécutées dans des clusters, l'invention combine plusieurs éléments parmi lesquels,
- des fonctionnalités de programmation mises en œuvre au niveau d'un middleware proposant une API (sigle d'*Application Programming Interface* en terminologie anglo-saxonne) aux utilisateurs, par exemple une API de type MPI (sigle de *Message Passing Interface* en terminologie anglo-saxonne) ou Portais ;
- un système de gestion du temps comprenant une virtualisation des alarmes et un algorithme de gestion d'horloges ; et
- un système de notification d'échéances pouvant être réalisé selon un mécanisme de type *userland* (c'est-à-dire un mécanisme mis en œuvre dans un espace mémoire utilisateur et utilisé par le système d'exploitation pour interagir avec le noyau), indépendamment du noyau, permettant d'obtenir des granularités réelles d'un transfert de bus c'est-à-dire d'obtenir une résolution temporelle de l'ordre de la durée d'un transfert d'une donnée via un bus de données (typiquement 100ns).

Le système de gestion du temps selon l'invention, comprenant une virtualisation des alarmes et un algorithme de gestion d'horloges, est ici intégré sous forme matérielle, par exemple sous la forme d'un composant électronique mis en œuvre dans une carte réseau. Ce composant comprend alors un système de notification utilisant une information temporelle (alarme, *timeout,* ...) adaptée aux besoins des applications en fonction du degré de précision nécessaire en terme de latence ou de granularité.

Selon un mode de réalisation particulier, le système de gestion du temps utilise un compteur de temps et un gestionnaire de queues de surveillance d'événements, cyclique, permettant de sélectionner une queue de surveillance d'événements à traiter en fonction de la valeur du compteur de temps et du nombre de queues de surveillance d'événements gérées (appelées queues d'événements dans un souci de concision).

Le compteur de temps est ici un registre qui s'incrémente pour compter le temps comme un entier en fonction d'impulsions reçues, typiquement à intervalle régulier (aussi appelée ticks d'horloge). Le nombre d'impulsions reçues nécessaire pour incrémenter de un le compteur de temps défini la granularité du système de gestion de temps. Cette granularité peut, par exemple, varier de quelques nanosecondes à quelques microsecondes en fonction de la demande et de la charge induite par le nombre d'événements dans le système.

Le gestionnaire de queues d'événements cyclique utilise une base de temps qui représente le nombre de queues d'événements gérées. Chaque queue d'événements est utilisée pour mémoriser des couples formés chacun d'une date d'échéance et d'une référence à une description d'un événement (ou référence à un événement). Comme décrit précédemment, une queue d'événements peut être identifiée par la valeur du compteur de temps et le nombre de queues gérées, par exemple en utilisant l'opérateur modulo. Dans ce cas, la valeur du compteur de temps modulo le nombre de queues gérées donne un identifiant de la queue d'événements à traiter.

Chaque queue d'événements est ici ordonnée selon les dates d'échéance associées aux événements. Ainsi, à un instant donné, tous les événements, dans la queue d'événements sélectionnée, dont les références sont associées à des dates d'échéance antérieures à un instant donné, typiquement l'instant présent, sont traités.

Un événement est ici directement accessible par un utilisateur à travers une API. Il comprend une date d'échéance et une référence à une description d'un événement, typiquement un pointeur vers une table, une mémoire cache ou une liste de messages. Une date d'échéance associée à un événement est typiquement une date calculée selon un instant de réception d'une commande relative à un événement et un délai tel qu'un *timeout.*

Selon un mode de réalisation particulier, le système de gestion du temps comprend plusieurs fonctions ou macros, par exemple les fonctions suivantes :
- une macro d'initialisation ayant pour objet de mettre en place des paramètres du système de gestion du temps (notamment la base de temps et la granularité) et allouer des queues d'événements ;
- une macro de nettoyage pour « nettoyer » des événements enregistrés dans le système de gestion du temps, sur une base individuelle, collective ou complète, c'est-à-dire enlever des événements dont les processus correspondants seraient morts ;
- une macro d'insertion permettant d'insérer des événements dans des queues d'événements ordonnées ;
- une macro pour retirer des événements dans des queues d'événements, par exemple lorsque ces événements ont été traités ; et
- une macro de stockage pour stocker les queues d'événements.

Il est observé que si, dans le mode de réalisation présenté ici, les événements sont gérés sous forme de queues d'événements, ils peuvent également être gérés sous d'autres formes, par exemple sous forme d'arbres permettant d'optimiser l'insertion d'événements selon les dates d'échéance associées en fonction des couples d'événements et de dates d'échéance préalablement mémorisés.

Comme décrit ci-dessus, le système de gestion du temps selon l'invention fait ici l'objet d'une implémentation matérielle dans un système distant, par exemple dans un système de type carte réseau.

Un exemple de mécanisme de gestion de queues d'un système de gestion du temps, conforme à un mode de réalisation particulier de l'invention, est illustré en référence à la figure 3.

Un tel mécanisme, référencé 300 sur la figure 3, comprend un compteur de temps 305, dont la valeur est notée *cpt,* incrémenté en fonction d'impulsions reçues. Le compteur de temps 305 est relié à un sélecteur 310 de queues d'événements. Ce dernier a pour objet la sélection d'une queue d'événements parmi plusieurs, ici parmi quatre référencées 315-1 à 315-4. Comme illustré, la sélection d'une queue d'événements 315-i est ici réalisée à l'aide de l'index *i* en fonction de la valeur *cpt* du compteur de temps 305 modulo 4 représentant le nombre de queues d'événements ou la base de temps (*i* = *cpt* [4]).

Selon l'exemple représenté, la valeur de l'index *i* est égale à 2. C'est donc la queue d'événements 315-2 qui est sélectionnée, comme illustré par la flèche en trait plein tracée entre le sélecteur 310 de queues d'événements et la queue d'événements 315-2.

Chaque queue d'événements, génériquement référencée 315, comprend un ensemble de paires constituées d'une date d'échéance notée ici *t_{i,j}* et d'une référence d'événement notée ici *E_{i,j},. i* représente un index de queue d'événements tandis que *j* un index de paire dans une queue d'événements. Comme décrit précédemment, les paires sont ici ordonnées, de façon croissante, selon les dates d'échéance (*t_{i,1}* ≤ *t_{i,2} ≤* ... ≤ *t_{i,n}*). Ainsi, par exemple, la queue d'événements 315-1 comprend un ensemble de paires parmi lesquels les paires (*t_{1,1}, E_{1,1}*)*,* (*t_{1,2}, E_{1,2}*) et (*t_{1,3}, E_{1,3}*).

Lorsqu'une queue (*i*) est sélectionnée, tous les événements (*E_{i,j}*) associés à cette queue et à des dates d'échéance (*t_{i,j}*) antérieures à la date courante (*t_{c}*) sont sélectionnés. Ainsi, dans l'exemple illustré, tous les événements (*E_{2,j}*) associés aux dates (*t_{2,j}*) antérieures à la date courante sont sélectionnés (∀ *j, t_{2,j}*) ≤ *t_{c}*).

Le mécanisme de gestion de queues d'événements utilise essentiellement deux fonctions, une fonction pour ajouter une référence à un événement et une date d'échéance associée dans une queue d'événements et fonction pour retirer une référence à un événement et la date d'échéance associée d'une queue d'événements.

A titre d'illustration, la fonction d'ajout d'un événement dans une queue d'événements est, par exemple, la fonction suivante :
*SET* (*t₀, d, ref*) *;*
où *t₀* est une date initiale, *d* représente une durée et *ref* représente une référence d'un événement à notifier lorsque la date courante (*t_{c}*) atteint une date d'échéance définie comme étant la date initiale *t₀* à laquelle est ajoutée la durée *d* (*t_{c} ≥ t₀* + *d*)*.*

Toujours à titre d'illustration et, de façon alternative, la fonction d'ajout d'un événement dans une queue d'événements peut-être la suivante :
*SET* (*t, ref*) ;
où *t* est une date d'échéance et *ref* représente une référence d'un événement à notifier lorsque la date courante atteint la date d'échéance (*t_{c} ≥ t*).

Lorsqu'une telle fonction est appelée, une entrée est créée dans une queue d'événements du mécanisme de gestion de queues, cette entrée comprenant la référence *ref* à l'événement ainsi que la date d'échéance *t,* ou des données relatives à ces informations. Cette entrée est créée de telle sorte que les dates d'échéance des événements d'une même queue d'événements soit ordonnées.

Lorsque le mécanisme de gestion de queues d'événements comprend plusieurs queues d'événements, la queue d'événements *i* dans laquelle doit être créée l'entrée comprenant la référence de l'événement et la date d'échéance est ici déterminée en fonction du temps courant et de la queue d'événements sélectionnée au temps courant. Ainsi, par exemple, si le mécanisme de gestion de queues d'événements comprend *n* queues d'événements et que la queue d'événements sélectionnée à l'instant présent est la queue d'événements *j*, la queue d'événements dans laquelle est créée l'entrée est la queue d'événements *i* avec *i* = *j* + (*t₀* + *d* - *t_{c}*) [*n*] ou *i* = *j* + (*t - t_{c}*) [*n*]*.*

De façon similaire, une fonction *REM* (*t₀, d, ref*) ou *REM* (*t, ref*) peut être utilisée pour supprimer une entrée ayant les paramètres (*t₀, d, ref*) ou (*t*, *ref*) dans une queue d'événements du mécanisme de gestion de queues d'événements.

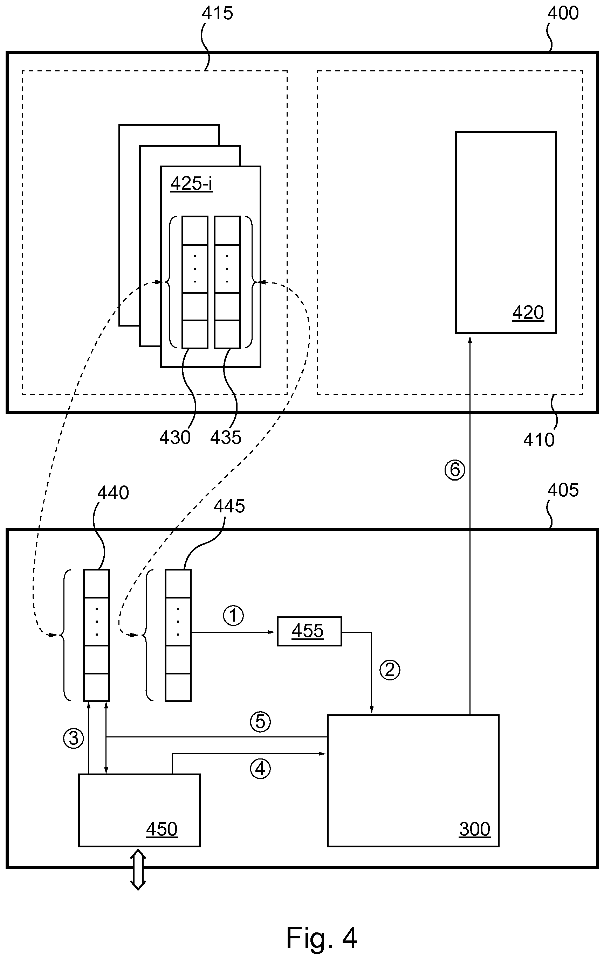

La figure 4 illustre un exemple d'intégration d'un mécanisme de gestion de queues d'événements, tel que celui représenté sur la figure 3, dans un système de gestion du temps mis en œuvre dans un système déporté tel qu'une carte réseau reliée à un nœud d'un cluster.

Selon un mode de réalisation particulier, l'invention est mise en œuvre dans un cluster comprenant un nœud 400 et une carte réseau 405. Elle offre des fonctions liées à la gestion du temps au nœud 400.

Le nœud 400 comprend notamment un espace 410 lié au système d'exploitation du nœud 400 et un espace utilisateur 415. L'espace 410 lié au système d'exploitation comprend, en particulier, le noyau 420 de ce dernier. L'espace utilisateur 415 permet l'exécution de processus, notamment du processus 425-*i* auquel est lié un espace mémoire virtuel comprenant ici un premier registre virtuel 430 d'événements et un second registre virtuel 435 de commandes.

La carte réseau 405 comprend ici le mécanisme de gestion de queues d'événements 300 décrit en référence à la figure 3. Elle comprend également un espace mémoire réelle comprenant ici un premier registre réel 440 d'événements et un second registre réel 445 de commandes, un registre d'entrée/sortie réseau 450 ainsi qu'un interpréteur de commandes 455.

L'interpréteur de commandes 455 est adapté à lire des commandes dans le premier registre réel 445 de commandes et à interpréter ces commandes au vu des fonctions proposées par le mécanisme de gestion de queues d'événements 300. Ce dernier est susceptible de générer des événements qui peuvent être transmis au premier registre réel 440 d'événements et au registre d'entrée/sortie réseau 450. De façon optionnelle, le mécanisme de gestion de queues d'événements 300 peut également être adapté à adresser des interruptions au noyau 420 du nœud 400.

Le premier registre virtuel 430 d'événements du nœud 400 est lié au premier registre réel 440 d'événements de la carte réseau 405 et le second registre virtuel 435 de commandes du nœud 400 est lié au second registre réel 445 de commandes de la carte réseau 405.

De tels liens, basés sur l'utilisation d'adresses virtuelles, permettent une écriture et une lecture dans un dispositif distant. Ainsi, notamment, lorsqu'une commande est écrite à une adresse du premier registre virtuel 435 de commandes du nœud 400, elle est écrite à l'adresse correspondante du premier registre réel 445 de commandes de la carte réseau 405. De façon similaire, lorsqu'un événement est lu à une adresse du second registre virtuel 430 d'événements du nœud 400, il est élu à l'adresse correspondante du second registre réel 440 d'événements de la carte réseau 405.

A l'aide de ces mécanismes de gestion du temps et d'adressage virtuel, il est possible d'utiliser des fonctions basées sur le temps dans le nœud 400 sans que ces fonctions soient implémentées dans le noyau de ce nœud.

Il est observé ici que si les registres virtuels sont ici implémentés dans le nœud 400 et les registres réels dans la carte réseau 405, il est possible, de façon alternative, d'implémenter les registres virtuels dans la carte réseau 405 et les registres réels dans le nœud 400. Il est également possible d'implémenter une partie des registres virtuels et une partie des registres réels dans la carte réseau 405 et une partie des registres virtuels et une partie des registres réels dans le nœud 400.

A titre d'illustration, il est considéré ici qu'une application mise en œuvre dans l'espace utilisateur 415 du nœud 400 souhaite recevoir un message d'un processus distant, c'est-à-dire exécuté dans un autre nœud du cluster, dans un temps donné, sans devoir surveiller la réception d'un tel message. Une telle contrainte peut notamment être liée à des problèmes connus sous le nom de *load-balancing.*

A ces fins, l'application génère une commande qui est écrite dans le premier registre virtuel 435 de commandes du nœud 400. Du fait du mécanisme de gestion de la mémoire virtuelle existant entre les registres 435 et 445, cette commande est écrite dans le premier registre réel 445 de commandes de la carte réseau 405. Cette commande peut, par exemple, avoir été initiée par la fonction suivante de la librairie MPI :
*MPI_RECV (params, timeout, request) ;*
comprenant, outre les paramètres standard (*params* et *request*) visant à définir le nœud dont doit être reçu le message ainsi qu'à identifier ce dernier, un paramètre *timeout* ayant pour objet de définir une période de temps au-delà de laquelle l'attente de message est interrompue.

Après avoir été écrite dans le registre 445, cette commande est lue par l'interpréteur de commandes 455 (étape ①). Lors de l'interprétation de la commande, l'interpréteur de commandes 455 crée un événement auquel il associe une date d'échéance (*t*) calculée comme étant la date courante (*t_{c}*) à laquelle est ajoutée le délai *timeout* (*t* = *t_{c}* + *timeout*). Une référence à cet événement et la date d'échéance associée sont alors insérés (étape ②) dans une queue d'événements, de préférence ordonnée, du mécanisme de gestion de queues d'événements 300.

Comme décrit précédemment, lorsque ce dernier comprend plusieurs queues d'événements, la queue d'événements *i* dans laquelle doivent être insérés la référence à l'événement et la date d'échéance associée est déterminée en fonction du temps courant et de la valeur du délai *timeout* modulo le nombre *n* de queues d'événements du mécanisme de gestion de queue d'événements (*i* = *(t_{c}* + *timeout) [n]).*

Cette commande est typiquement suivie d'une commande d'attente d'événement, par exemple la fonction de la librairie MPI :
*MPI_WAIT (request) ;*
A nouveau, cette commande est obtenue et interprétée par l'interpréteur de commandes 455.

Selon un mode de réalisation particulier, une entrée est créée dans le registre d'entrée/sortie 450 pour préciser certains des paramètres associés au message attendu, c'est-à-dire pour indiquer un emplacement d'écriture d'un message particulier.

L'application exécutée sur le nœud 406 s'exécute alors de façon standard.

Si le message attendu du réseau est reçu, via le registre d'entrée/sortie 450 (selon des paramètres préalablement mémorisés par ce dernier), avant que la valeur de la date courante (*t_{c}*) n'atteigne celle de la date d'échéance (*t*) précédemment calculée (*t_{c}* < *t*), le message est traité de façon standard. Il est adressé au nœud 400 via les registres 440 et 430 (étape ③). En outre, la référence à l'événement et la date d'échéance correspondants mémorisés dans une queue d'événements du mécanisme de gestion de queues d'événements 300 sont supprimés (étape ④).

Si, au contraire, la valeur de la date courante (*t_{c}*) excède celle de la date d'échéance (*t*) précédemment calculée (*t_{c}* ≥ *t*), par exemple lorsque le processus à l'origine du message est mort, une notification est faite par le mécanisme de gestion de queues d'événements. Une telle notification peut notamment consister à ajouter un événement particulier dans le registre 440, et donc le registre 430, pour alerter l'application et, de préférence, à supprimer l'entrée correspondant à la réception de ce message dans le registre d'entrée/sortie 450 afin d'éviter que ce message ne soit traité s'il est reçu ultérieurement (étape ⑤).

Selon un mode de réalisation particulier, une interruption peut être générée et adressée au noyau du système d'exploitation du nœud 400 (étape ⑥).

De nombreuses autres fonctions peuvent être mises en oeuvre de façon similaire.

Ainsi, toujours à titre d'illustration, le noyau du système d'exploitation d'un nœud d'un cluster peut adresser une commande de compte à rebours d'un temps donné à un processus applicatif, c'est-à-dire, conformément à un mode de réalisation de l'invention, écrire une telle commande dans un registre virtuel de commandes du processus. Du fait du mécanisme de gestion de la mémoire virtuelle, cette commande est écrite dans un registre de commandes d'un système déporté mettant en œuvre un mécanisme de gestion de queues d'événements. Une entrée ayant pour paramètres une référence d'alarme et une date d'échéance déterminée selon la valeur du compte à rebours et la date de création de l'entrée est alors créée dans une queue d'événements de ce mécanisme. Ainsi, lorsque la date courante atteint la date d'échéance, une alarme est générée, c'est-à-dire qu'une référence à cet événement est écrite dans le registre d'événements du système déporté et, par conséquent, dans le registre d'événements du processus applicatif considéré.

Naturellement, pour satisfaire des besoins spécifiques, une personne compétente dans le domaine de l'invention pourra appliquer des modifications dans la description précédente.

## Revendications

1. Procédé de décompte du temps dans un système comprenant un périphérique et au moins un nœud permettant l'exécution d'un système d'exploitation et d'au moins un processus applicatif, le périphérique comprenant un espace mémoire réel et l'au moins un nœud comprenant un espace mémoire virtuel correspondant au moins partiellement audit espace mémoire réel, ledit périphérique offrant un mécanisme de décompte de temps déporté du nœud, ce procédé comprenant les étapes suivantes,
- écriture, dans l'espace mémoire virtuel du nœud, d'une commande de décompte de temps, ladite commande comprenant une référence à un événement et une référence de temps,
- réception, par le périphérique, de la commande de décompte de temps dans ledit espace mémoire réel, dans une partie correspondant à une partie dudit espace mémoire virtuel,
- création, dans ledit périphérique, d'une entrée dans une queue de surveillance, ladite entrée comprenant des données relatives auxdites références d'événement et de temps ; et
si un message lié à l'événement est reçu par le périphérique,
- comparaison, dans ledit périphérique, d'un instant courant et d'au moins un instant d'échéance lié à une donnée relative à une référence de temps mémorisée dans ladite queue de surveillance ; et
- en réponse à ladite comparaison, si ledit instant courant est postérieur audit au moins un instant d'échéance, mémorisation d'une donnée relative à une référence liée à ladite donnée relative à une référence de temps mémorisée dans ladite queue de surveillance, dans ledit espace mémoire réel, dans une partie correspondant à une partie dudit espace mémoire virtuel,
le procédé comprenant en outre une étape de sélection de ladite queue de surveillance parmi une pluralité de queues de surveillance comprenant chacune une pluralité de couples de référence à un événement et de référence de temps, la sélection étant basée sur un compteur de temps et un nombre de queues de surveillance, en utilisant l'opérateur modulo.

2. Procédé selon la revendication 1 comprenant en outre une étape d'estimation dudit au moins un instant d'échéance.

3. Procédé selon l'une quelconque des revendications 1 et 2, ladite queue de surveillance étant ordonnée.

4. Programme d'ordinateur comprenant des instructions adaptées à la mise en œuvre de chacune des étapes du procédé selon l'une quelconque des revendications 1 à 3 lorsque ledit programme est exécuté sur un ordinateur.

5. Dispositif de décompte du temps pour un système comprenant un périphérique et au moins un nœud permettant l'exécution d'un système d'exploitation et d'au moins un processus applicatif, le périphérique comprenant un espace mémoire réel et l'au moins un nœud comprenant un espace mémoire virtuel correspondant au moins partiellement audit espace mémoire réel, ledit dispositif comprenant un mécanisme de décompte de temps déporté du nœud et les moyens suivants :
- moyens pour écrire, dans l'espace mémoire virtuel du nœud, d'une commande de décompte de temps, ladite commande comprenant une référence à un événement et une référence de temps,
- moyens pour recevoir, par le périphérique, la commande de décompte de temps dans ledit espace mémoire réel, dans une partie correspondant à une partie dudit espace mémoire virtuel,
- moyens pour créer, dans ledit périphérique, une entrée dans une queue de surveillance, ladite entrée comprenant des données relatives auxdites références d'événement et de temps ;
- moyens pour recevoir, par le périphérique, un message lié à l'événement ;
- moyens pour comparer un instant courant et au moins un instant d'échéance lié à une donnée relative à une référence de temps mémorisée dans ladite queue de surveillance ; et
- moyens pour mémoriser, en réponse à ladite comparaison, si ledit instant courant est postérieur audit au moins un instant d'échéance, une donnée relative à une référence liée à ladite donnée relative à une référence de temps mémorisée dans ladite queue de surveillance, dans ledit espace mémoire réel, dans une partie correspondant à une partie dudit espace mémoire virtuel,
le dispositif comprenant en outre des moyens de sélection de ladite queue de surveillance parmi une pluralité de queues de surveillance comprenant chacune une pluralité de couples de référence à un événement et de référence de temps, la sélection étant basée sur un compteur de temps et un nombre de queues de surveillance, en utilisant l'opérateur modulo.

6. Périphérique comprenant le dispositif selon la revendication 5 et ledit espace mémoire réel.

## Patentansprüche

1. Verfahren zur Zeitabrechnung in einem System, das ein Peripheriegerät und mindestens einen Knoten umfasst, welche die Ausführung eines Betriebssystems und mindestens eines Anwendungsprozesses zulassen, wobei das Peripheriegerät einen realen Speicherplatz und mindestens einen Knoten umfasst, der einen virtuellen Speicherplatz umfasst, der zumindest teilweise dem realen Speicherplatz entspricht, wobei das Peripheriegerät einen vom Knoten versetzten Zeitabrechnungsmechanismus bietet, wobei dieses Verfahren die folgenden Schritte umfasst:
- Einschreiben in den virtuellen Speicherplatz des Knotens, eines Zeitabrechnungsbefehls, wobei der Befehl einen Verweis auf ein Ereignis und einen Zeitverweis umfasst,
- Empfangen, durch das Peripheriegerät, des Zeitabrechnungsbefehls im realen Speicherplatz in einem Teil, der einem Teil des virtuellen Speicherplatzes entspricht,
- Generieren, im Peripheriegerät, eines Eintrags in eine Überwachungswarteschlange, wobei der Eintrag Daten umfasst, die sich auf die Ereignis- und Zeitverweise beziehen; und
wenn eine mit dem Ereignis verbundene Nachricht durch das Peripheriegerät empfangen wird,
- Vergleichen, im Peripheriegerät, eines momentanen Zeitpunkts und mindestens eines Verfallszeitpunkts, der mit einem Datenelement verbunden ist, das sich auf einen in der Überwachungswarteschlange gespeicherten Zeitverweis bezieht; und
- im Ansprechen auf den Vergleich, wenn der momentane Zeitpunkt nach dem mindestens einen Verfallszeitpunkt liegt, Speichern eines Datenelements, das sich auf einen Verweis bezieht, der mit dem Datenelement verbunden ist, das sich auf einen in der Überwachungswarteschlange gespeicherten Zeitverweis bezieht, in dem realen Speicherplatz in einem Teil, der einem Teil des virtuellen Speicherplatzes entspricht,
wobei das Verfahren darüber hinaus einen Schritt einer Auswahl der Überwachungswarteschlange aus mehreren Überwachungswarteschlangen umfasst, von denen jede mehrere Verweispaare auf ein Ereignis und einen Zeitverweis umfasst, wobei die Auswahl auf einem Zeitzähler und einer Anzahl von Überwachungswarteschlangen beruht, indem der Modulo-Operator verwendet wird.

2. Verfahren nach Anspruch 1, darüber hinaus einen Schritt eines Einschätzens des mindesten einen Verfallszeitpunkts umfassend.

3. Verfahren nach einem der Ansprüche 1 und 2, wobei die Überwachungswarteschlange geordnet ist.

4. Computerprogramm, das Instruktionen umfasst, die an die Umsetzung jedes der Verfahrensschritte nach einem der Ansprüche 1 bis 3 angepasst sind, wenn das Programm auf einem Computer ausgeführt wird.

5. Zeitabrechnungsvorrichtung für ein System, das ein Peripheriegerät und mindestens einen Knoten umfasst, welche die Ausführung eines Betriebssystems und mindestens eines Anwendungsprozesses zulassen, wobei das Peripheriegerät einen realen Speicherplatz und mindestens einen Knoten umfasst, der einen virtuellen Speicherplatz umfasst, der zumindest teilweise dem realen Speicherplatz entspricht, wobei die Vorrichtung einen vom Knoten versetzten Zeitabrechnungsmechanismus und die folgenden Mittel umfasst:
- Mittel zum Einschreiben, in den virtuellen Speicherplatz des Knotens, eines Zeitabrechnungsbefehls, wobei der Befehl einen Verweis auf ein Ereignis und einen Zeitverweis umfasst,
- Mittel zum Empfangen, durch das Peripheriegerät, des Zeitabrechnungsbefehls im realen Speicherplatz in einem Teil, der einem Teil des virtuellen Speicherplatzes entspricht,
- Mittel zum Generieren, im Peripheriegerät, eines Eintrags in eine Überwachungswarteschlange, wobei der Eintrag Daten umfasst, die sich auf die Ereignis- und Zeitverweise beziehen;
- Mittel zum Empfangen, durch das Peripheriegerät, einer mit dem Ereignis verbundenen Nachricht;
- Mittel zum Vergleichen eines momentanen Zeitpunkts und mindestens eines Verfallszeitpunkts, der mit einem Datenelement verbunden ist, das sich auf einen in der Überwachungswarteschlange gespeicherten Zeitverweis bezieht; und
- Mittel zum Speichern, im Ansprechen auf den Vergleich, ob der momentane Zeitpunkt nach dem mindestens einen Verfallszeitpunkt liegt, eines Datenelements, das sich auf einen Verweis bezieht, der mit dem Datenelement verbunden ist, das sich auf einen in der Überwachungswarteschlange gespeicherten Zeitverweis bezieht, in dem realen Speicherplatz in einem Teil, der einem Teil des virtuellen Speicherplatzes entspricht,
wobei das Gerät darüber hinaus Mittel zur Auswahl der Überwachungswarteschlange aus mehreren Überwachungswarteschlangen umfasst, von denen jede mehrere Verweispaare auf ein Ereignis und einen Zeitverweis umfasst,
wobei die Auswahl auf einem Zeitzähler und einer Anzahl von Überwachungswarteschlangen beruht, indem der Modulo-Operator verwendet wird.

6. Peripheriegerät, das die Vorrichtung nach Anspruch 5 und den realen Speicherplatz umfasst.

## Claims

1. A timing method in a system comprising a peripheral and at least one node enabling the execution of an operating system and of at least one application process, the peripheral comprising a real memory space and the at least one node comprising a virtual memory space corresponding at least partially to said real memory space, said peripheral providing a timing mechanism located away from the node, the method comprising the following steps,
- writing, in the virtual memory space of the node, a timing command, said command comprising a reference to an event and a time reference,
- receiving, by the peripheral, the timing command in said real memory space, in a part corresponding to a part of said virtual memory space,
- creating, in said peripheral, an entry in a monitoring queue, said entry comprising data relative to said event and time references; and
if a message linked to the event is received by the peripheral,
- comparing, in said peripheral, a current point in time and at least one scheduled point in time linked to an item of data relative to a time reference stored in said monitoring queue; and
- in response to said comparing, if said current point in time is after said at least one scheduled point in time, storing an item of data relative to a reference linked to said item of data relative to a time reference stored in said monitoring queue, in said real memory space, in a part corresponding to a part of said virtual memory space,
the method further comprising a step of selecting said monitoring queue from among a plurality of monitoring queues each comprising a plurality of event reference and time reference pairs, the selecting being based on a time counter and a number of monitoring queues, using the modulo operator.

2. A method according to claim 1, further comprising a step of estimating said at least one scheduled point in time.

3. A method according to any one of claims 1 and 2, said monitoring queue being ordered.

4. A computer program comprising instructions adapted for carrying out each of the steps of the method according to any one of claims 1 to 3 when said program is executed on a computer.

5. A timing device for a system comprising a peripheral and at least one node enabling the execution of an operating system and of at least one application process, the peripheral comprising a real memory space and the at least one node comprising a virtual memory space corresponding at least partially to said real memory space, said device comprising a timing mechanism located away from the node and the following means:
- means for writing, in the virtual memory space of the node, a timing command, said command comprising a reference to an event and a time reference,
- means for receiving, by the peripheral, the timing command in said real memory space, in a part corresponding to a part of said virtual memory space,
- means for creating, in said peripheral, an entry in a monitoring queue, said entry comprising data relative to said event and time references;
- means for receiving, by the peripheral, a message linked to the event;
- means for comparing a current point in time and at least one scheduled point in time linked to an item of data relative to a time reference stored in said monitoring queue; and
- means for storing, in response to said comparing, if said current point in time is after said at least one scheduled point in time, an item of data relative to a reference linked to said item of data relative to a time reference stored in said monitoring queue, in said real memory space, in a part corresponding to a part of said virtual memory space,
the device further comprising means for selecting said monitoring queue from among a plurality of monitoring queues each comprising a plurality of event reference and time reference pairs, the selecting being based on a time counter and a number of monitoring queues, using the modulo operator.

6. A peripheral comprising the device according to claim 5 and said real memory space.
